# EUROPÄISCHE PATENTSCHRIFT

(11) **EP 1 307 641 B1**
(45) Veröffentlichungstag und Bekanntmachung des Hinweises auf die Patenterteilung: **15.12.2004**
(21) Anmeldenummer: 01962591.2
(22) Anmeldetag: 07.08.2001
(51) Int. Cl.: F02C 1/04, F02C 7/08, F02C 3/28, F28D 17/02

(54) **VERFAHREN UND VORRICHTUNG ZUR UMWANDLUNG VON THERMISCHER ENERGIE IN MECHANISCHE ARBEIT**
METHOD AND DEVICE FOR CONVERTING THERMAL ENERGY INTO MECHANICAL WORK
PROCEDE ET DISPOSITIF POUR CONVERTIR DE L'ENERGIE THERMIQUE EN TRAVAIL MECANIQUE

(30) Priorität: 11.08.2000 DE 10039246
(43) Veröffentlichungstag der Anmeldung: 07.05.2003
(73) Patentinhaber: APPLIKATIONS- UND TECHNIKZENTRUM FÜR ENERGIEVERFAHRENS-, UMWELT-, UND STRÖMUNGSTECHNIK, 92237 Sulzbach-Rosenberg (DE)
(72) Erfinder: EMMEL, Andreas, 92256 Hahnbach (DE); STEVANOVIC, Dragan, 92237 Sulzbach-Rosenberg (DE)
(74) Vertreter: Gassner, Wolfgang, Dr.
(86) Internationale Anmeldenummer: PCT/DE2001/002939
(87) Internationale Veröffentlichungsnummer: WO 2002/014663

(56) Entgegenhaltungen:
- EP-A- 0 361 065
- EP-A- 0 654 591
- DE-A- 3 931 582
- DE-C- 4 317 947
- GB-A- 2 274 880
- US-A- 6 092 300
- PATENT ABSTRACTS OF JAPAN vol. 1999, no. 02, 26. Februar 1999 (1999-02-26) & JP 10 299423 A (TOSHIBA CORP), 10. November 1998 (1998-11-10) & US 6 167 691 B1 (YOSHIKAWA) 2. Januar 2001 (2001-01-02)
- GERICKE B ET AL: "BIOMASSENVERSTROMUNG DURCH VERGASUNG UND INTEGRIERTE GASTURBINENPROZESSE" VGB KRAFTWERKSTECHNIK, VGB KRAFTWERKSTECHNIK GMBH. ESSEN, DE, Bd. 74, Nr. 7, 1. Juli 1994 (1994-07-01), Seiten 595-604, XP000457120 ISSN: 0372-5715

## Beschreibung

Die Erfindung betrifft ein Verfahren und Vorrichtung zur Umwandlung thermischer Energie in mechanische Arbeit, wobei ein erstes und ein zweites Mittel zum Speichern thermischer Energie wechselweise in einen Turbinenzweig eingeschaltet werden.

Aus der DE 43 17 947 C1 ist ein Verfahren zur Umwandlung thermischer Energie eines Gases in mechanische Arbeit bekannt. Dabei wird Luft quasi isotherm komprimiert. Danach wird die komprimierte Luft isobar mittels eines Regenerators erhitzt. Die heiße komprimierte Luft wird dann mittels Brennern in einem zweiten Schritt weiter erhitzt und schließlich in eine Gasturbine entspannt. Ein Teil der heißen komprimierten Luft wird vor dem Eintritt in die Brenner abgezweigt und zur Vorwärmung des zum Betrieb der Brenner erforderlichen Brennstoffs benutzt. Die aus der Gasturbine austretende entspannte warme Abluft, wird über einen zweiten Regenerator geleitet, der wechselweise anstelle des Regenerators in den Turbinenzweig eingeschaltet wird. - Das Erhitzen der komprimierten Luft mittels eines Regenerators und nachgeschalteter Brenner ist aufwendig. Im Falle des Einsatzes fester Brennstoffe ist hier eine besondere Vergasungseinrichtung vorzusehen.

Aus der DE 44 26 356 A1 ist eine Vorrichtung zum Trocknen von Grünfutter, Spänen und dgl., zur Wärme- und Stromerzeugung bekannt. Dabei wird Biomasse in einer Brennkammer verbrannt. Das heiße Rauchgas gelangt über einen Wärmetauscher. Dort gibt es seine Wärme an zuvor komprimierte und damit bereits erwärmte Luft ab. Die heiße komprimierte Luft wird in eine Gasturbine entspannt. Die aus der Gasturbine austretende warme Abluft wird zur Trocknung von Spänen, Schnitzeln, Grünfutter oder dgl. benutzt. Sie kann aber auch als vorgewärmte Verbrennungsluft der Brennkammer zugeführt werden. - Die Vorrichtung ist primär eine Trocknungsvorrichtung. Sie eignet sich nicht zur effizienten Erzeugung von Strom. Der die Umsetzung der thermischen Energie in mechanische Arbeit betreffende Wirkungsgrad ist hier nicht besonders hoch.

Aus der EP 0 654 591 A1 ist eine Vorrichtung zur Gewinnung elektrischer Energie aus Brennstoffen bekannt. Dabei wird verdichtete Luft mittels mehrerer hintereinander geschalteter Wärmetauscher erhitzt und anschließend auf eine Turbine geleitet. Die bekannte Vorrichtung ist kompliziert aufgebaut. Sie ist nicht besonders effizient.

Die DE 39 31 582 A1 beschreibt ein Verfahren zur Nutzung von Hochtemperaturabwärme. Dabei sind zwei Regenerativ-Wärmespeicher vorgesehen, welche wechselweise von einem Abgas- in einen Turbinenzweig geschaltet werden. Ähnliche Verfahren sind aus den Patent Abstracts of Japan JP 62085136 A sowie JP 61028726 A bekannt. Die Effizienz dieser Verfahren ist verbessert, nicht jedoch optimal.

Aufgabe der Erfindung ist es, die Nachteile nach dem Stand der Technik zu beseitigen. Es soll insbesondere ein Verfahren angegeben werden, das eine effiziente Umsetzung von aus der Verbrennung von Biomasse gewonnener thermischer Energie in mechanische Arbeit ermöglicht. Weiteres Ziel ist es, eine kostengünstige Vorrichtung zur Durchführung des Verfahrens anzugeben.

Diese Aufgabe wird durch die Merkmale der Ansprüche 1 und 14 gelöst. Zweckmäßige Ausgestaltungen ergeben sich aus den Merkmalen der Ansprüche 2 bis 15 und 16 bis 22.

Nach Maßgabe der Erfindung ist ein Verfahren zur Umwandlung von thermischer Energie in mechanische Arbeit vorgesehen, wobei ein erstes und ein zweites Mittel zum Speichern thermischer Energie wechselweise in einen Turbinenzweig eingeschaltet werden, mit folgenden Schritten:
a) Komprimieren eines oxidierenden Gases, wobei dessen Temperatur von Umgebungstemperatur RT auf eine erste Temperatur T1 und dessen Druck auf einen ersten Druck P1 erhöht wird,
b) Abkühlen des komprimierten Gases auf eine zweite Temperatur T2,
c) Durchleiten des komprimierten Gases durch ein erstes Mittel zum Speichern thermischer Energie, wobei die Temperatur des Gases in einem Schritt auf eine dritte Temperatur T3 erhöht wird,
d) Entspannen des ersten Drucks P1 in einer Gasturbine auf im wesentlichen Atmosphärendruck, wobei das Gas von der dritten Temperatur T3 auf eine vierte Temperatur T4 abgekühlt wird,
e) Zuführen des Gases zu einer stromabwärts nachgeschalteten Brennkammer,
f) Verbrennen von Biomasse zusammen mit dem Gas, und
g) Durchleiten der Rauchgase durch ein zweites Mittel zum Speichern thermischer Energie.

Als oxidierendes Gas kommt z.B. Luft, Sauerstoff, mit Sauerstoff angereicherte Luft und dgl. in Betracht. Indem das komprimierte Gas in einem Schritt, d.h. ohne das Zwischenschalten weiterer Wärmequellen, auf die dritte Temperatur erhöht wird, kann das Verfahren besonders effizient geführt werden. Der erzielbare Gesamtwirkungsgrad beläuft sich auf etwa 74 %.

Die Abkühlung beim Schritt lit. b kann durch Beaufschlagung mit Flüssigkeit, vorzugsweise Wasser, oder durch einen Wärmetauscher bewirkt werden. Die bei diesem Schritt durch die Abkühlung gewonnene thermische Energie kann als nutzbare Wärme ausgekoppelt werden. Das erhöht weiter die Effizienz des Verfahrens.

Beim Schritt lit. c kann ein Teilstrom des Gases durch einen Bypass am Mittel zum Speichern thermischer Energie vorbei geleitet werden. Die Abgasverluste der gesamten Vorrichtung können damit verringert werden.

Nach dem Schritt lit. d wird ein Teil des Gases zweckmäßigerweise abgezweigt und zur Auskopplung thermischer Energie über einen Wärmetauscher geleitet und/oder mit der zu verbrennenden Biomasse zu deren Trocknung in Kontakt gebracht. Nach einem weiteren Ausgestaltungsmerkmal wird aus den bei der Verbrennung gebildeten Rauchgasen Staub abgetrennt. Die Abtrennung kann beispielsweise mittels eines Zyklons erfolgen.

Als besonders vorteilhaft hat es sich erwiesen, daß das Rauchgas beim Schritt lit. g in weniger als 200 ms auf eine Temperatur von weniger als 150°C, vorzugsweise 90 bis 110°C, abgekühlt wird. Dadurch wird die Bildung von schädlichen Dioxinen und Furanen unterbunden.

Für die Temperatur des Gases gilt zweckmäßigerweise:
T2 < T1 < T4 < T3.

Die zweite Temperatur T2 ist vorzugsweise kleiner als 150° C, insbesondere kleiner als 100° C. Durch die Regeneratoren wird vorzugsweise abwechselnd Gas und Rauchgas durch ein Schüttgut mit einem maximalen Korndurchmesser geführt, das im Ringraum zwischen einem im wesentlichen zylinderförmigen Heißrost und einem diesen umgebenden Kaltrost aufgenommen ist, und wobei im Boden des Ringraums mindestens eine Ablaßöffnung zum Ablassen des Schüttguts vorgesehen ist, wobei während oder nach dem Durchführen von Rauchgas eine vorgegebene Menge von Schüttgut abgelassen wird, so daß eine vom Schüttgut auf den Heiß- und Kaltrost ausgeübte Druckspannung reduziert wird. Die mittlere Korngröße des Schüttguts ist vorzugsweise kleiner als 15 mm. Die nach dem vorgenannten Verfahren betriebenen sogenannten Schüttgutregeneratoren sind besonders effizient und reparaturunanfällig.

Das abgelassene Schüttgut kann mittels eines Transportgases in den Ringraum zurückgeführt werden. Dabei wird nach dem Abtrennen des Schüttguts vom Transportgas eine darin enthaltene Staubfraktion abgetrennt. Die Funktion der Schüttung als Filter zur Entstaubung des durchgeführten Prozeßgases bleibt aufrechterhalten. Ferner ist das in die Umgebung abgegebene Transportgas unbelastet.

Um den Prozeß quasikontinuierlich zu führen, kann ein drittes Mittel zum Speichern thermischer Energie im Wechsel mit dem ersten oder zweiten Mittel zum Speichern thermischer Energie in den Turbinenzweig eingeschaltet werden.

Nach weiterer Maßgabe der Erfindung wird eine Vorrichtung zur Umwandlung von thermischer Energie in mechanische Arbeit vorgeschlagen, wobei vorgesehen sind:
ein Turbinenzweig mit
   - einem Kompressor zum Verdichten eines angesaugten oxidierenden Gases,
   - einem stromabwärts nachgeschalteten Mittel zum Abkühlen des komprimierten Gases,
   - einem dem Mittel zum Abkühlen stromabwärts nachgeschalteten ersten Schüttgutregenerator,
   - einer dem ersten Schüttgutregenerator stromabwärts nachgeschalteten Gasturbine,
und einen Vorwärmzweig mit
   - einer stromabwärts des ersten Schüttgutregenerators nachgeschalteten Brennkammer,
   - einem stromabwärts der Brennkammer nachgeschalteten zweiten Schüttgutregenerator und
   - einem Mittel zum wechselweise Einschalten des zweiten Schüttgutregenerators in den Turbinen- und des ersten Schüttgutregenerator in den Vorwärmzweig.

Als Schüttgutregeneratoren werden hier vorzugsweise die aus der DE 42 36 619 C2 oder aus der EP 0 908 692 A2 bekannten Schüttgutregeneratoren verwendet. Der Offenbarungsgehalt der vorgenannten Druckschriften wird hiermit einbezogen. Die Verwendung solcher Schüttgutregeneratoren führt zu einer besonders effizienten arbeitenden Vorrichtung.

Die Gasturbine, der Kompressor und ein Generator sind zweckmäßigerweise auf einer Welle angeordnet. Durch die unmittelbare Übertragung der mechanischen Arbeit von der Gasturbine auf den Kompressor und den Generator werden Reibungsverluste vermieden.

Nach einem weiteren Ausgestaltungsmerkmal kann der Brennkammer eine Rauchgasreinigungseinrichtung nachgeschaltet sein. Zwischen die Gasturbine und die Brennkammer kann ferner ein Wärmetauscher zum Auskoppeln thermischer Energie eingeschaltet sein. Die vorgenannten Merkmale tragen weiter zur Umweltverträglichkeit sowie zur Steigerung der Effizienz der Vorrichtung bei.

Nach einem besonders bevorzugten Ausgestaltungsmerkmal ist beim Schüttgutregenerator ein im wesentlichen zylinderförmig ausgebildeter Heißrost koaxial von einem Kaltrost umgeben und in einem zwischen dem Heiß- und Kaltrost gebildeten Ringraum ein Schüttgut mit einem maximalen Korndurchmesser Dₘₐₓ aufgenommen ist, wobei der Heiß- und/oder Kaltrost so ausgebildet ist/sind, daß das Schüttgut beim Aufheizen sich radial ausdehnen kann. - Ein solcher Schüttgutregenerator weißt eine besonders lange Standzeit auf. Wegen Einzelheiten wird auf die EP 0 908 692 A2 verwiesen. Solche Schüttgutregeneratoren zeichnen sich durch besonders niedrige Energieverluste und eine hohe Wärmerückgewinnung aus.

Mit der erfindungsgemäßen Vorrichtung können auch bei kleinen elektrischen Leistungen, d.h. kleiner 2 MW, hohe elektrische Wirkungsgrade erreicht werden. Ferner kann mittels der erfindungsgemäßen Vorrichtung Wärme ausgekoppelt und einem separaten Kreislauf z.B. als Nutzwärme für Trocknungszwecke zugeführt werden.

Nachfolgend werden Ausführungsbeispiele der Erfindung anhand der Zeichnung näher erläutert. Es zeigen:
- Fig. 1: ein erstes Flußdiagramm,
- Fig. 2: ein zweites Flußdiagramm,
- Fig. 3: ein drittes Flußdiagramm und
- Fig. 4: ein viertes Flußdiagramm.

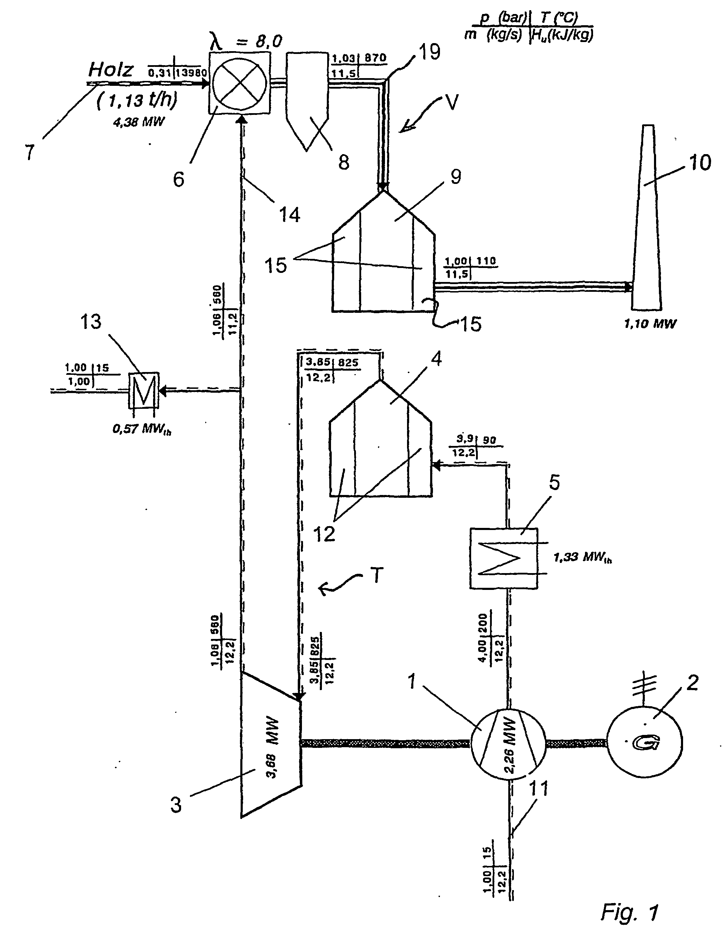

In Fig. 1 ist schematisch eine erste Vorrichtung zur Umwandlung von thermischer Energie in mechanische Arbeit gezeigt.

Im Turbinenzweig T ist ein Kompressor 1 mit einem Generator 2 auf der Welle einer Gasturbine 3 angeordnet. In eine vom Kompressor 1 zu einem ersten Regenerator 4 führenden Leitung ist ein erster Wärmetauscher 5 eingeschaltet. Vom ersten Regenerator 4 führt eine Leitung zur Gasturbine 3. Die aus der Gasturbine 3 austretende Abluft wird über eine weitere Leitung einer Brennkammer 6 als vorgewärmte Verbrennungsluft zugeführt. Die Brennkammer 6 ist Bestandteil eines mit dem Bezugszeichen V bezeichneten Vorwärmzweigs. Als weiterer Ausgangsstoff für die Verbrennung wird der Brennkammer 6 die mit dem Bezugszeichen 7 bezeichnete Biomasse zugeführt. Das gebildete Rauchgas 19 wird über eine Rauchgasentstaubungsvorrichtung, z.B. einen Zyklon 8, gereinigt und einem zweiten Regenerator 9 zugeführt. Das abgekühlte Rauchgas 19 gelangt schließlich vom zweiten Regenerator 9 in den Kamin 10. - Der erste 4 und der zweite Regenerator 9 sind vorzugsweise als Schüttgutregeneratoren ausgebildet.

Die Funktion der Vorrichtung ist folgende: Mit dem Bezugszeichen 11 bezeichnete Luft wird bei einer Umgebungstemperatur RT von etwa 15° C vom Kompressor 1 angesaugt und auf einen ersten Druck P1 von etwa 4 bar komprimiert. Dabei erhöht sich die Temperatur der Luft 11 auf eine erste Temperatur T1 von etwa 200° C. Im ersten Wärmetauscher 5 wird die komprimierte Luft 11 auf eine zweite Temperatur T2 von etwa 90° C abgekühlt. Der erste Druck P1 bleibt im wesentlichen konstant. Er beträgt am Eingang des ersten Regenerators 4 etwa 3,9 bar. Die Luft 11 wird durch einen im ersten Regenerator 4 befindlichen ersten Ringraum 12 geführt, in dem heißes Schüttgut, z.B. Al₂O₃-Kugeln mit einem Durchmesser von etwa 8 mm, als Wärmespeicher aufgenommen ist. Durch das Durchleiten der Luft 11 durch das heiße Schüttgut wird die Luft 11 auf eine dritte Temperatur von etwa 825° C erhöht. Der Druck der komprimierten Luft 11 bleibt im wesentlichen unverändert. Er beträgt am Eingang der Gasturbine 3 etwa 3,85 bar. Die heiße komprimierte Luft 11 wird nun über der Gasturbine 3 entspannt und in mechanische Arbeit umgewandelt. Die entspannte Luft verläßt bei einer Temperatur von etwa 560° C und einem etwa dem Atmosphärendruck entsprechenden Druck von 1,06 bar die Gasturbine 3. Sie wird als vorgewärmte Verbrennungsluft 14 der Brennkammer 6 zugeführt. Überschüssige vorgewärmte Verbrennungsluft 14 kann ausgekoppelt und deren thermische Energie über einen zweiten Wärmetauscher 13 in nutzbare Wärme umgewandelt werden. Durch die Verbrennung der Biomasse 7 mit der vorgewärmten Verbrennungsluft 14 entstehen heiße Rauchgase 19 mit einer Temperatur von etwa 870° C. Die heißen Rauchgase 19 werden in der Rauchgasreinigungseinrichtung 8 entstaubt. Sie werden dann durch den Ringraum 15 des zweiten Regenerators 9 geführt und nach Abkühlung auf etwa 110° C über den Kamin 10 an die Umgebung abgegeben.

Mittels einer hier nicht gezeigten Vorrichtung können der erste 4 und der zweite Regenerator 9 wechselweise im Turbinenzweig T bzw. im Vorwärmzweig V betrieben werden.

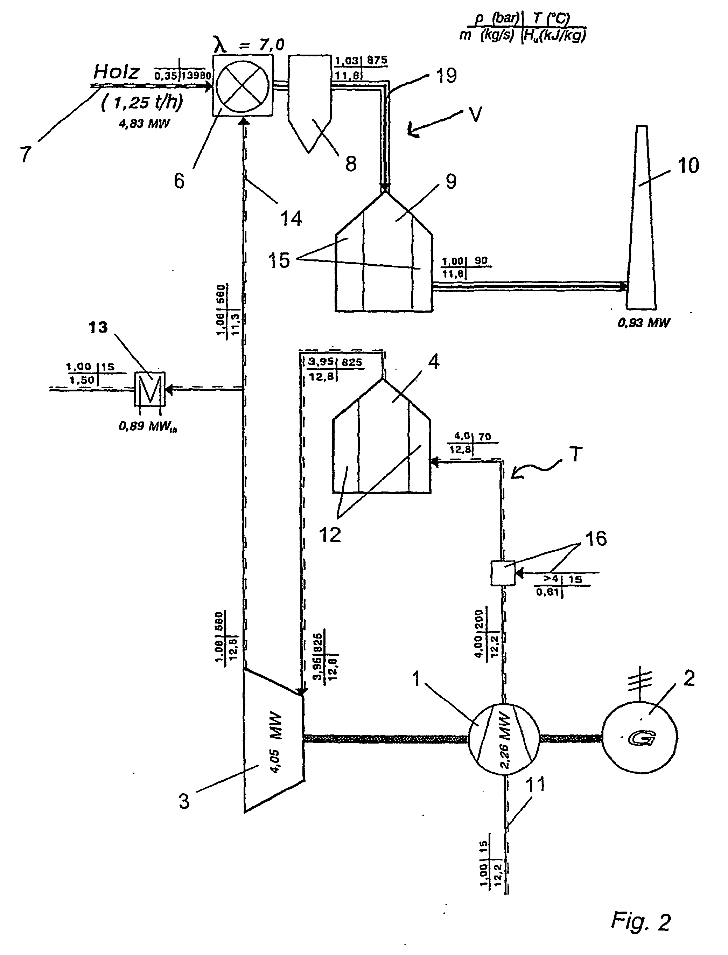

Bei der in Fig. 2 gezeigten Vorrichtung ist anstelle des ersten Wärmetauschers 5 eine Vorrichtung zur Flüssigkeitseindüsung 16 in den Turbinenzweig T eingeschaltet. Mittels dieser Vorrichtung ist es möglich, die zweite Temperatur T2 auf etwa 70° C einzustellen. Es kann damit eine besonders hohe Leistung der Gasturbine 3 erzielt werden. Der Wirkungsgrad der Stromerzeugung kann damit auf 34,4 % gesteigert werden. Gleichzeitig fällt der Gesamtwirkungsgrad wegen der verringerten Wärmeleistung auf etwa 53 %.

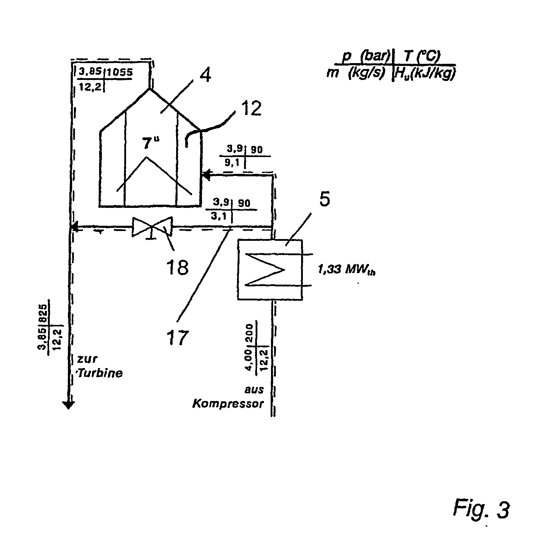

Wie aus Fig. 3 ersichtlich ist, ist es auch möglich, im in den Turbinenzweig T eingeschalteten ersten Regenerator 4 Wärme mit einer höheren Temperatur von bis zu 1100° C zu speichern. In diesem Fall liegt die Temperatur der vorgewärmten Luft am Ausgang des ersten Regenerators 4 bei etwa 1055° C. Sie muß dann vor dem Eintritt in die Gasturbine 3 mittels eines Bypasses 17 mit einem Teilstrom kühlerer Luft aus dem ersten Wärmetauscher 5 gekühlt werden. Mittels eines Regelventils 18 kann die Eintrittstemperatur der Luft in die Gasturbine auf 825° C eingestellt werden. Im zweiten Regenerator 9 kann so ein niedriger Durchfluß eingestellt werden. Die Menge an Rauchgas 19 wird reduziert. Die Abgas- und Kaminverluste werden verringert. Der Wirkungsgrad des Verfahrens wird erhöht.

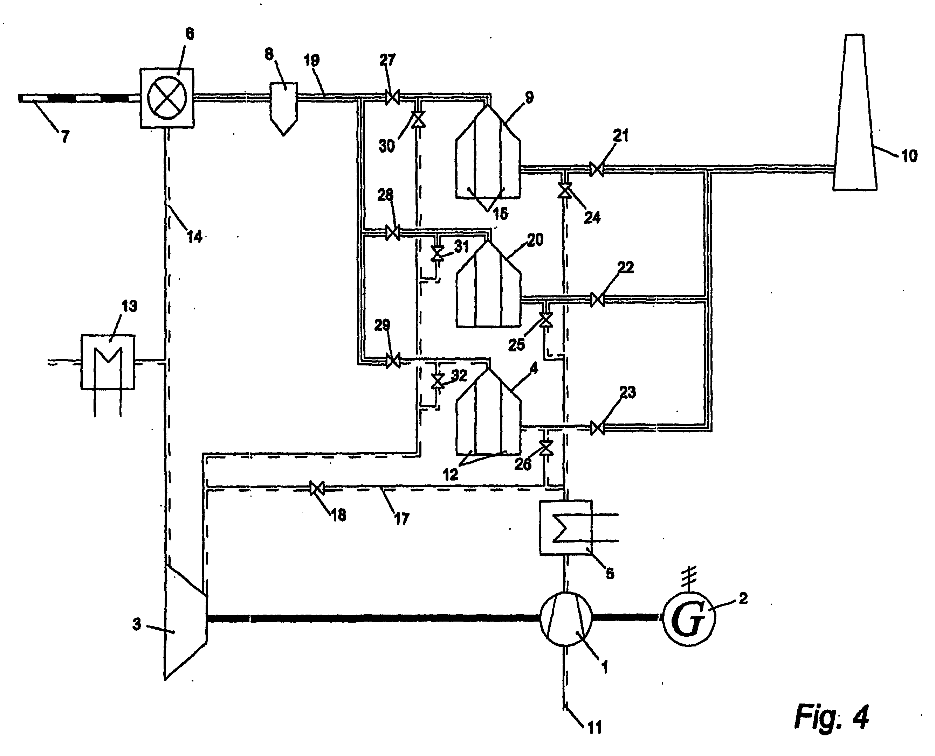

Fig. 4 zeigt eine Vorrichtung, bei der neben dem ersten 4 und dem zweiten Regenerator 9 ein dritter Regenerator 20 vorgesehen ist. Der dritte Regenerator 20 kann im Wechsel mit dem ersten 4 und dem zweiten Regenerator 9 in den Turbinenzweig T oder dem Vorwärmzweig V eingeschaltet werden. Dazu sind Umschaltventile 21 bis 32 in den entsprechenden Leitungen vorgesehen.

### Bezugszeichenliste

- 1: Kompressor
- 2: Generator
- 3: Gasturbine
- 4: erster Regenerator
- 5: erster Wärmetauscher
- 6: Brennkammer
- 7: Biomasse
- 8: Zyklon
- 9: zweiter Regenerator
- 10: Kamin
- 11: Luft
- 12: erster Ringraum
- 13: zweiter Wärmetauscher
- 14: Verbrennungsluft
- 15: zweiter Ringraum
- 16: Einrichtung zur Wassereindüsung
- 17: Bypaß
- 18: Regelventil
- 19: Rauchgas
- 20: dritter Regenerator
- 21-32: Umschaltventile

- T: Turbinenzweig
- V: Vorwärmzweig

## Patentansprüche

1. Verfahren zur Umwandlung von thermischer Energie in mechanische Arbeit, wobei ein erstes (4) und ein zweites Mittel (9) zum Speichern thermischer Energie wechselweise in einen Turbinenzweig (T) eingeschaltet werden, mit folgenden Schritten:
a) Komprimieren eines oxidierenden Gases (11), wobei dessen Temperatur von Umgebungstemperatur RT auf eine erste Temperatur T1 und dessen Druck auf einen ersten Druck P1 erhöht wird,
b) Abkühlen des komprimierten Gases (11) auf eine zweite Temperatur T2,
c) Durchleiten des komprimierten Gases (11) durch ein erstes Mittel (4) zum Speichern thermischer Energie, wobei die Temperatur des Gases (11) in einem Schritt auf eine dritte Temperatur T3 erhöht wird,
d) Entspannen des ersten Drucks P1 in einer Gasturbine (3) auf im wesentlichen Atmosphärendruck, wobei das Gas (11) von der dritten Temperatur T3 auf eine vierte Temperatur T4 abgekühlt wird,
e) Zuführen des Gases (11, 14) zu einer stromabwärts nachgeschalteten Brennkammer (6),
f) Verbrennen von Biomasse (7) zusammen mit dem Gas (14) und
g) Durchleiten der Rauchgase (19) durch ein zweites Mittel (9) zum Speichern thermischer Energie.

2. Verfahren nach Anspruch 1, wobei die Abkühlung beim Schritt lit. b durch Beaufschlagung des Gases (11) mit Flüssigkeit, vorzugsweise Wasser, oder mittels eines Wärmetauschers bewirkt wird.

3. Verfahren nach Anspruch 1 oder 2, wobei die beim Schritt lit. b durch die Abkühlung gewonnene thermische Energie als nutzbare Wärme ausgekoppelt wird.

4. Verfahren nach einem der vorhergehenden Ansprüche, wobei beim Schritt lit. c ein Teilstrom des Gases (11) durch einen Bypass am Mittel (4, 9) zum Speichern thermischer Energie vorbeigeleitet wird.

5. Verfahren nach einem der vorhergehenden Ansprüche, wobei nach dem Schritt lit. d ein Teil des Gases (14) abgezweigt und zur Auskopplung thermischer Energie über einen Wärmetauscher (13) geleitet wird.

6. Verfahren nach einem der vorhergehenden Ansprüche, wobei nach dem Schritt lit. d ein Teil des Gases (14) abgezweigt und mit der zu verbrennenden Biomasse (7) zu deren Trocknung in Kontakt gebracht wird.

7. Verfahren nach einem der vorhergehenden Ansprüche, wobei aus den bei der Verbrennung gebildeten Rauchgasen (19) Staub abgetrennt wird.

8. Verfahren nach einem der vorhergehenden Ansprüche, wobei die Rauchgase (19) beim Schritt lit. g in weniger als 200 ms auf eine Temperatur von weniger als 150° C, vorzugsweise auf 90 bis 110°C, abgekühlt werden.

9. Verfahren nach einem der vorhergehenden Ansprüche, wobei für die Temperaturen des Gases (11, 14) gilt:
T2 < T1 < T4 < T3

10. Verfahren nach einem der vorhergehenden Ansprüche, wobei die zweite Temperatur T2 kleiner als 150° C, vorzugsweise kleiner als 100° C, ist.

11. Verfahren nach einem der vorhergehenden Ansprüche, wobei durch die als Schüttgutregeneratoren ausgebildeten Mittel (4, 9) zum Speichern thermischer Energie abwechselnd Gas und Verbrennungsgas durch Schüttgut mit einem maximalen Korndurchmesser (Dₘₐₓ) geführt wird, das im Ringraum (12, 15) zwischen einem im wesentlichen zylinderförmigen Heißrost und einem diesen umgebenden Kaltrost aufgenommen ist, und wobei im Boden des Ringraums (12, 15) mindestens eine Ablaßöffnung zum Ablassen des Schüttguts vorgesehen ist, wobei während oder nach dem Durchführen von Rauchgas (19) eine vorgegebene Menge an Schüttgut abgelassen wird, so daß eine vom Schüttgut auf den Heiß- und Kaltrost ausgeübte Druckspannung reduziert wird.

12. Verfahren nach Anspruch 10, wobei der maximale Korndurchmesser (Dₘₐₓ) des Schüttguts kleiner als 15 mm ist.

13. Verfahren nach einem der vorhergehenden Ansprüche, wobei das abgelassene Schüttgut mittels eines Transportgases in den Ringraum (12, 15) zurückgeführt wird.

14. Verfahren nach einem der vorhergehenden Ansprüche, wobei nach der Abtrennen der Schüttguts vom Transportgas eine darin enthaltene Staubfraktion abgetrennt wird.

15. Verfahren nach einem der vorhergehenden Ansprüche, wobei eine drittes Mittel zum Speichern thermischer Energie im Wechsel mit dem ersten (4) oder zweiten Mittel (9) zum Speichern thermischer Energie in den Turbinenzweig (T) eingeschaltet wird.

16. Vorrichtung zur Umwandlung von thermischer Energie in mechanische Arbeit, wobei vorgesehen sind:
ein Turbinenzweig (T) mit
- einem Kompressor (1) zum Verdichten angesaugten oxidierenden Gases (11),
- einem dem Kompressor (1) stromabwärts nachgeschalteten Mittel (5, 16) zum Abkühlen des komprimierten Gases (11),
- einem dem Mittel (5, 16) zum Abkühlen stromabwärts nachgestalteten ersten Schüttgutregenerator (4),
- einer dem ersten Schüttgutregenerator (4) stromabwärts nachgeschalteten Gasturbine (3),
und einen Vorwärmzweig (V) mit
- einer stromabwärts des ersten Schüttgutregenerators (4) und der Gasturbine (3) nachgeschalteten Brennkammer (6),
- einem stromabwärts der Brennkammer (6) nachgeschalteten zweiten Schüttgutregenerator (9) und
- einem Mittel (21-32) zum wechselweise Einschalten des zweiten Schüttgutregenerators (9) in den Turbinen- (T) und des ersten Schüttgutregenerators (4) in den Vorwärmzweig (V).

17. Vorrichtung nach Anspruch 16, wobei die Gasturbine (3), der Kompressor (1) und ein Generator (2) auf einer Welle angeordnet sind.

18. Vorrichtung nach Anspruch 16 oder 17, wobei der Brennkammer (6) eine Rauchgasreinigungseinrichtung (8) nachgeschaltet ist.

19. Vorrichtung nach Anspruch 16 bis 18, wobei zwischen die Gasturbine (3) und die Brennkammer (6) ein Wärmetauscher (13) zur Auskopplung thermischer Energie eingeschaltet ist.

20. Vorrichtung nach einem der Ansprüche 16 bis 19, wobei beim Schüttgutregenerator (4, 9) ein im wesentlichen zylinderförmig ausgebildeter Heißrost koaxial von einem Kaltrost umgeben ist und in einem zwischen dem Heiß- und dem Kaltrost gebildeten Ringraum (12, 15) ein Schüttgut mit einem maximalen Korndurchmesser (Dₘₐₓ) aufgenommen ist, und wobei der Heiß- und/oder Kaltrost so ausgebildet ist/sind, daß das Schüttgut beim Aufheizen sich radial ausdehnen kann.

21. Vorrichtung nach einem der Ansprüche 16 bis 20, wobei das Mittel (4, 9) zum Speichern der thermischen Energie mit einem Bypass (17) versehen ist.

22. Vorrichtung nach einem der Ansprüche 16 bis 21, wobei ein dritter Schüttgutregenerator (20) vorgesehen und das Mittel (21-32) zum wechselweisen Einschalten auch zum Einschalten des dritten Schüttgutregenerators (9) in den Turbinen- (T) und in den Vorwärmzweig (V) geeignet ist.

## Claims

1. Method for converting thermal energy into mechanical work, a first (4) and a second means (9) for storing thermal energy being connected alternately into a turbine branch (T), with the following steps:
a) compressing an oxidising gas (11), its temperature being raised from ambient temperature RT to a first temperature T1 and its pressure being raised to a first pressure P1,
b) cooling the compressed gas (11) down to a second temperature T2,
c) leading the compressed gas (11) through a first means (4) for storing thermal energy, the temperature of the gas (11) being raised to a third temperature T3 in one step,
d) expanding the first pressure P1 in a gas turbine (3) to substantially atmospheric pressure, the gas (11) being cooled down from the third temperature T3 to a fourth temperature T4,
e) feeding the gas (11, 14) to a combustion chamber (6) connected downstream,
f) burning biomass (7) together with the gas (14), and
g) leading the flue gases (19) through a second means (9) for storing thermal energy.

2. Method according to Claim 1, the cooling in step b being effected by acting on the gas (11) with liquid, preferably water, or by means of a heat exchanger.

3. Method according to Claim 1 or 2, the thermal energy obtained by the cooling in step b being coupled out as useable heat.

4. Method according to one of the preceding claims, a partial stream of the gas (11) being led in step c through a by-pass past the means (4, 9) for storing thermal energy.

5. Method according to one of the preceding claims, part of the gas (14) being branched off after step d and being led to a heat exchanger (13) in order to couple out thermal energy.

6. Method according to one of the preceding claims, part of the gas (14) being branched off after step d and being brought into contact with the biomass (7) to be burned, in order to dry the latter.

7. Method according to one of the preceding claims, dust being separated off from the flue gases (19) formed during the combustion.

8. Method according to one of the preceding claims, the flue gases (19) being cooled down to a temperature of less than 150°C, preferably to 90 to 110°C, in less than 200 ms in step g.

9. Method according to one of the preceding claims, it being valid for the temperatures of the gases (11, 14) that:
T2 < T1 < T4 < T3

10. Method according to one of the preceding claims, the second temperature T2 being less than 150°C, preferably less than 100°C.

11. Method according to one of the preceding claims, gas and combustion gas being led alternately through the means (4, 9) for storing thermal energy, constructed as bulk material regenerators, through bulk material having a maximum grain diameter (Dₘₐₓ) which is accommodated in the annular chamber (12, 15) between a substantially cylindrical hot grate and a cold grate surrounding the latter, and at least one discharge opening for discharging the bulk material being provided in the bottom of the annular chamber (12, 15), a predefined quantity of bulk material being discharged while or after flue gas (19) is led through, so that a compressive stress exerted on the hot and cold grates by the bulk material is reduced.

12. Method according to Claim 10, the maximum grain diameter (Dₘₐₓ) of the bulk material being less than 15 mm.

13. Method according to one of the preceding claims, the bulk material discharged being fed back by means of a transport gas into the annular chamber (12, 15).

14. Method according to one of the preceding claims, where after the bulk material has been separated from the transport gas, a dust fraction contained therein is separated off.

15. Method according to one of the preceding claims, a third means for storing thermal energy being connected into the turbine branch (T) in alternation with the first (4) or second means (9) for storing thermal energy.

16. Apparatus for converting thermal energy into mechanical work, the following being provided:
a turbine branch (T) comprising:
- a compressor (1) for compressing an oxidising gas (11) drawn in,
- a means (5, 16) connected downstream of the compressor (1) for cooling down the compressed gas (11),
- a first bulk material regenerator (4) connected downstream of the cooling means (5, 16),
- a gas turbine (3) connected downstream of the first bulk material regenerator (4),
and a preheating branch (V) comprising
- a combustion chamber (6) connected downstream of the first bulk material regenerator (4) and the gas turbine (3),
- a second bulk material regenerator (9) connected downstream of the combustion chamber (6) and
- a means (21, 32) for the alternate connection of the second bulk material regenerator (9) into the turbine branch (T) and the connection of the first bulk material regenerator (4) into the preheating branch (V).

17. Apparatus according to Claim 16, the gas turbine (3), the compressor (1) and a generator (2) being arranged on one shaft.

18. Apparatus according to Claim 16 or 17, a flue gas cleaning device (8) being connected downstream of the combustion chamber (6).

19. Apparatus according to Claim 16 to 18, a heat exchanger (13) for coupling thermal energy out being connected in between the gas turbine (3) and the combustion chamber (6).

20. Apparatus according to one of Claims 16 to 19, a substantially cylindrical hot grate in the bulk material regenerator (4, 9) being surrounded coaxially by a cold grate, and a bulk material with a maximum grain diameter (Dₘₐₓ) being accommodated in an annular chamber (12, 15) formed between the hot and the cold grates, and the hot and/or cold grates being constructed in such a way that the bulk material can expand radially when heated.

21. Apparatus according to one of Claims 16 to 20, the means (4, 9) for storing thermal energy being provided with a by-pass (17).

22. Apparatus according to one of Claims 16 to 21, a third bulk material regenerator (20) being provided, and the means (21-32) for alternate connection also being suitable to connect the third bulk material regenerator (9) into the turbine branch (T) and into the preheating branch (V).

## Revendications

1. Procédé pour la transformation d'énergie thermique en travail mécanique, un premier (4) et un deuxième moyen (9) destiné au stockage d'énergie thermique intervenant alternativement dans une section de turbine (T) suivant les opérations suivantes :
a) Compression d'un gaz oxydant (11), dont la température est augmentée de température ambiante RT à une première température T1 et dont la pression est augmentée à une première pression P1,
b) Refroidissement du gaz comprimé (11) à une deuxième température T2,
c) Conduction du gaz comprimé (11) par un premier moyen (4) pour le stockage d'énergie thermique, la température du gaz (11) étant augmentée en une opération à une troisième température T3,
d) Détente de la première pression P1 dans une turbine à gaz (3) à une pression essentiellement atmosphérique, le gaz (11) étant refroidi de la troisième température T3 à une quatrième température T4,
e) Amenée du gaz (11, 14) à une chambre de combustion (6) branchée en aval,
f) Combustion de biomasse (7) avec le gaz (14) et
g) Conduction de gaz de fumée (19) par un deuxième moyen (9) pour le stockage d'énergie thermique.

2. Procédé selon la revendication 1, le refroidissement à l'opération mentionnée au point b étant obtenu par admission de gaz (11) avec un liquide, de préférence de l'eau, ou au moyen d'un échangeur thermique.

3. Procédé selon la revendication 1 ou 2, l'énergie thermique gagnée par le refroidissement à l'opération mentionnée au point b étant isolée sous forme de chaleur utile.

4. Procédé selon l'une des revendications précédentes, un flux partiel du gaz (11) à l'opération mentionnée au point c contournant le moyen (4, 9) par un by-pass pour le stockage d'énergie thermique.

5. Procédé selon l'une des revendications précédentes, une partie du gaz (14) selon l'opération mentionnée au point d étant dérivée et conduite pour la séparation d'énergie thermique via un échangeur thermique (13).

6. Procédé selon l'une des revendications précédentes, une partie du gaz (14) selon l'opération mentionnée au point d étant dérivée et amenée en contact avec la biomasse (7) à brûler pour son séchage.

7. Procédé selon l'une des revendications précédentes, de la poussière étant séparée des gaz de fumée (19) générés lors de la combustion.

8. Procédé selon l'une des revendications précédentes, les gaz de fumée (19) à l'opération mentionnée au point g étant refroidis en moins de 200 ms à une température inférieure à 150° C, de préférence à une température comprise entre 90 et 110° C.

9. Procédé selon l'une des revendications précédentes,
T2 < T1 < T4 < T3
s'appliquent pour les températures du gaz (11, 14)

10. Procédé selon l'une des revendications précédentes, la deuxième température T2 étant inférieure à 150° C, de préférence inférieure à 100° C.

11. Procédé selon l'une des revendications précédentes, alternativement du gaz et du gaz de combustion étant conduits par l'intermédiaire des moyens (4, 9) sous forme de régénérateurs de matières en vrac pour le stockage d'énergie thermique via une matière en vrac d'un diamètre de grain maximal (Dₘₐₓ) qui est placée dans l'espace annulaire (12, 15) entre une grille chauffante essentiellement cylindrique et une grille froide entourant cette dernière, et au moins un orifice d'évacuation étant prévu sur la base de l'espace annulaire (12, 15) pour l'évacuation de la matière en vrac, une quantité définie de matière en vrac étant évacuée pendant ou après le passage de gaz de fumée (19) de façon qu'une résistance à la compression exercée par la matière en vrac sur la grille chauffante et la grille froide soit réduite.

12. Procédé selon la revendication 10, le diamètre de grain maximal (Dₘₐₓ) de la matière en vrac étant inférieur à 15 mm.

13. Procédé selon l'une des revendications précédentes, la matière en vrac évacuée étant reconduite dans l'espace annulaire (12, 15) au moyen d'un gaz transporteur.

14. Procédé selon l'une des revendications précédentes, après séparation de la matière en vrac du gaz transporteur, une fraction de poussière qui y est contenue étant séparée.

15. Procédé selon l'une des revendications précédentes, un troisième moyen intervenant pour le stockage d'énergie thermique en alternance avec le premier (4) ou le deuxième (9) moyen pour le stockage d'énergie thermique dans la section de turbine (T).

16. Dispositif pour la transformation d'énergie thermique en travail mécanique, étant prévues:
une section de turbine (T) avec
- un compresseur (1) pour la compression de gaz oxydant aspiré (11),
- un moyen (5, 16) monté en aval du compresseur (1) pour le refroidissement du gaz comprimé (11),
- un premier régénérateur de matières en vrac (4) placé en aval du moyen (5, 16) pour le refroidissement,
- une turbine à gaz (3) montée en aval du premier régénérateur de matières en vrac (4),
et une section de préchauffage (V) avec
- une chambre de combustion (6) montée en aval du premier régénérateur de matières en vrac (4) et de la turbine à gaz (3),
- un deuxième régénérateur de matières en vrac (9) monté en aval de la chambre de combustion (6) et
- un moyen (21-32) pour le branchement alternatif du deuxième régénérateur de matières en vrac (9) dans la section de turbine (T) et du premier régénérateur de matières en vrac (4) dans la section de préchauffage (V).

17. Dispositif selon la revendication 16, la turbine à gaz (3), le compresseur (1) et un générateur (2) étant disposés sur un arbre.

18. Dispositif selon la revendication 16 ou 17, un dispositif d'épuration de gaz de fumée (8) étant connecté en aval de la chambre de combustion (6).

19. Dispositif selon les revendications 16 à 18, un échangeur thermique (13) étant intercalé entre la turbine à gaz (3) et la chambre de combustion (6) pour l'isolation d'énergie thermique.

20. Dispositif selon l'une des revendications 16 à 19, pour le régénérateur de matières en vrac (4, 9), une grille chauffante essentiellement de forme cylindrique étant entourée coaxialement d'une grille froide et une matière en vrac d'un diamètre de grain maximal (Dₘₐₓ) se trouvant dans un espace annulaire (12, 15) formé entre la grille chauffante et la grille froide et la grille chauffante et/ou froide étant telle(s) que la matière en vrac peut se dilater radialement en cas d'échauffement.

21. Dispositif selon l'une des revendications 16 à 20, le moyen (4, 9) étant destiné au stockage de l'énergie thermique avec un by-pass (17).

22. Dispositif selon l'une des revendications 16 à 21, un troisième régénérateur de matières en vrac (20) étant prévu et le moyen (21-32) étant approprié pour le branchement alternatif et aussi pour le branchement du troisième régénérateur de matières en vrac (9) dans la section de turbine (T) et dans la section de préchauffage (V).
